# EUROPEAN PATENT APPLICATION

(11) **EP 4 826 698 A1**
(43) Date of publication of application: **21.10.2026**
(21) Application number: 24903738.3
(22) Date of filing: 11.12.2024
(51) Int. Cl.: G08G 5/00, B64C 13/20, B64U 10/14, B64U 20/60, B64U 30/299

(54) **AERIAL VEHICLE, ATTACHMENT MEMBER FOR AERIAL VEHICLE, AND METHOD FOR CONTROLLING AERIAL VEHICLE**

(30) Priority: 13.12.2023 JP 2023209914
(71) Applicant: Tokushima University, Tokushima-shi, Tokushima 770-8501 (JP); DIC Corporation, Tokyo 174-8520 (JP)
(72) Inventor: MIWA Masafumi, Tokushima-shi, Tokushima 770-8501 (JP); MIZUTANI Shoma, Tokyo 103-8233 (JP); TOYOMURA Kyouichi, Tokyo 103-8233 (JP)
(74) Representative: Plougmann Vingtoft a/s
(86) International application number: PCT/JP2024/043906
(87) International publication number: WO 2025/127085

(57) **Abstract**

[Object] Provided is an air vehicle, an accessory member for an air vehicle, and a method for controlling an air vehicle, capable of preventing a crash of the air vehicle even if the air vehicle comes into contact with an obstacle or the like and preventing damage not only to the air vehicle but also to the obstacle or the like and a surrounding object.

[Solution] A method for controlling an air vehicle 1 whose flight state is controlled based on a control signal for controlling a flight route includes, when collision between the air vehicle and an object is detected, stopping control of the flight state using the control signal for controlling the flight route at the time of the collision. When the air vehicle collides with the object, control of the flight state using the control signal for controlling the flight route at the time of the collision is stopped, and thereby the air vehicle can be prevented from colliding with the object repeatedly.

## Description

### Technical Field

The present invention relates to an air vehicle, an accessory member for an air vehicle, and a method for controlling an air vehicle.

### Background Art

In recent years, small unmanned aircraft (drones) have been used for various purposes, such as aerial photography, inspection of structures and the like, and spraying of agricultural chemicals. When such a small unmanned aircraft flies autonomously, it flies on a predetermined route to reach a destination. However, when an obstacle or the like is present on the flight route, the small unmanned aircraft may collide with the obstacle or the like. Therefore, for a small unmanned aircraft that flies autonomously, a technology of detecting an obstacle or the like to avoid collision of the small unmanned aircraft with the obstacle or the like has been developed (see, for example, Patent Literature 1).

However, when a sensor of a small unmanned aircraft has a failure, that is, a sensor that detects a flight state, surrounding circumstances, an obstacle, or the like has a failure, there is a possibility that an obstacle or the like is unavoidable even if the obstacle or the like can be detected, or that the obstacle or the like cannot be detected. Then, the small unmanned aircraft may collide with the obstacle or the like, and the collision of the small unmanned aircraft with the obstacle or the like leads to damage to the small unmanned aircraft. In particular, in a small unmanned aircraft with a propeller, damage to the propeller causes a crash of the small unmanned aircraft. Therefore, for the small unmanned aircraft with the propeller, a guard that protects the propeller has been developed so that the propeller is not damaged even when the small unmanned aircraft collides with an obstacle or the like (see, for example, Patent Literature 2). With such a guard, even if the small unmanned aircraft collides with an obstacle or the like, damage to the propeller or a main body can be prevented, which can prevent a crash of the small unmanned aircraft.

Meanwhile, when an obstacle or the like is present on a flight route of a small unmanned aircraft that flies autonomously, even if the small unmanned aircraft collides with the obstacle or the like, the small unmanned aircraft attempts to continue flying on the predetermined flight route, and therefore may re-collide with the obstacle or the like to repeat collisions. Then, even when a guard protecting a propeller is provided, the guard will eventually be damaged, and when the propeller is damaged after the guard getting damaged, the small unmanned aircraft will crash. Further, in a case in which the guard and the propeller are not damaged even when the small unmanned aircraft repetitively collides with the obstacle or the like, the obstacle or the like may be damaged. Then, there is also a possibility that, for example, crash of the small unmanned aircraft or damage to the obstacle or the like causes damage to a surrounding object.

Patent Literature 3 discloses a technology of detecting contact between an obstacle or the like and a drone by a contact sensor and causing the drone to descend or crash on the spot upon detection of the contact. With this technology, repeated collisions of the drone with the obstacle or the like can be avoided. However, since the drone descends or crashes on the spot, an object or the like at the descent or crash location may be damaged depending on the location of the descent or crash.

Patent Literature 4 discloses that, when an object comes into contact with a propeller, control for stabilizing flight of a drone, that is, control for preventing a crash of the drone, is executed. Further, Patent Literature 4 discloses a technology in which, when an object comes into contact with an arm provided with the propeller, the drone is moved away from the object and a flight path that does not pass through the object location is replanned.

### Citation List

### Patent Literature

Patent Literature 1: Japanese Unexamined Patent Application Publication No. 2021-170372
Patent Literature 2: WO2022/255208
Patent Literature 3: WO2019/189076
Patent Literature 4: Japanese Unexamined Patent Application Publication No. 2023-40693

### Disclosure of Invention

### Technical Problem

With the technology of Patent Literature 4, there is a possibility that influence of a crash of the drone on the surroundings can be avoided and flight of the drone can be continued to reach a destination. However, the technology of Patent Literature 4 is a technology aimed at continuation of movement to the destination or the like even after collision, and in a case in which a flight path that does not pass through the object location cannot be replanned or an appropriate flight path cannot be replanned, a crash of the drone or the like may eventually cause damage or the like to the surroundings.

The present invention is made in view of the above circumstances, and an object thereof is to provide an air vehicle, an accessory member for an air vehicle, and a method for controlling an air vehicle, capable of preventing a crash of the air vehicle even if the air vehicle comes into contact with an obstacle or the like and preventing damage not only to the air vehicle but also to the obstacle or the like and a surrounding object.

### Solution to Problem

### <Air Vehicle Control Method>

A method for controlling an air vehicle according to a first invention is a method for controlling an air vehicle whose flight state is controlled based on a control signal for controlling a flight route. The method includes, when collision between the air vehicle and an object is detected, stopping control of the flight state using the control signal for controlling the flight route at the time of the collision.

A method for controlling an air vehicle according to a second invention may include, in the first invention, after the stopping of the control of the flight state using the control signal for controlling the flight route at the time of the collision, controlling the flight state based on at least one of a post-collision control instruction recorded in the air vehicle and a control instruction from outside.

In a method for controlling an air vehicle according to a third invention, in the second invention, the post-collision control instruction may include information instructing flight on a flight route different from the flight route at the time of the collision.

In a method for controlling an air vehicle according to a fourth invention, in any one of the first inventions, a control unit that controls flight of the air vehicle may have a collision detection function of detecting the collision between the air vehicle and the object.

In a method for controlling an air vehicle according to a fifth invention, in the fourth invention, the collision detection function of the control unit may include detecting the collision based on a signal from a collision detection sensor that detects the collision between the air vehicle and the object.

In a method for controlling an air vehicle according to a sixth invention, in the fourth invention, the air vehicle may include a guard protecting an airframe.

In a method for controlling an air vehicle according to a seventh invention, in the sixth invention, the guard may be made of an elastic member.

In a method for controlling an air vehicle according to an eighth invention, in the seventh invention, the collision detection sensor may include a sensor that detects deformation of the elastic member.

In a method for controlling an air vehicle according to a ninth invention, in the sixth invention, the guard may be provided in such a manner that a portion of the guard is located higher than a center of gravity of the air vehicle. The portion may be located outward of the airframe and forward in a traveling direction of the air vehicle while the air vehicle assumes a flight attitude in plan view of the air vehicle.

### <Air Vehicle>

An air vehicle according to a tenth invention includes an airframe and a control unit. The airframe includes a drive mechanism. The control unit controls operation of the drive mechanism to control a flight state. The control unit has a collision detection function of detecting collision between the airframe and an object, and a function of, when the collision detection function detects collision between the air vehicle and the object, stopping control of the flight state at the time of the collision.

In an air vehicle according to an eleventh invention, in the tenth invention, the control unit may have a function of, after the stopping of the control of the flight state at the time of the collision, controlling the flight state based on at least one of a post-collision control instruction recorded in the control unit and a control instruction from outside.

In an air vehicle according to a twelfth invention, in the eleventh invention, the post-collision control instruction may include information instructing flight on a flight route different from the flight route at the time of the collision.

In an air vehicle according to a thirteenth invention, in the tenth invention, the control unit may have a collision detection function of detecting the collision between the air vehicle and the object.

In an air vehicle according to a fourteenth invention, in the thirteenth invention, the collision detection function of the control unit may include detecting the collision based on a signal from a collision detection sensor that detects the collision between the air vehicle and the object.

In an air vehicle according to a fifteenth invention, in the fourteenth invention, the air vehicle may include a guard protecting the airframe.

In an air vehicle according to a sixteenth invention, in the fifteenth invention, the guard may be made of an elastic member.

In an air vehicle according to a seventeenth invention, in the sixteenth invention, the collision detection sensor may include a sensor that detects deformation of the elastic member.

In an air vehicle according to an eighteenth invention, in the fifteenth invention, the guard may be provided in such a manner that a portion of the guard is located higher than a center of gravity of the air vehicle. The portion may be located outward of the airframe of the air vehicle and forward in a traveling direction of the air vehicle while the air vehicle assumes a flight attitude in plan view of the air vehicle.

### <Air Vehicle Accessory Member>

An accessory member for an air vehicle according to a nineteenth invention includes a guard to be attached to an airframe of an air vehicle to protect the airframe. The guard includes a collision detection sensor that detects collision with an object.

In an accessory member for an air vehicle according to a twentieth invention, in the nineteenth invention, the guard may be made of an elastic member.

In an accessory member for an air vehicle according to a twenty-first invention, in the twentieth invention, the collision detection sensor may include a sensor that detects deformation of the elastic member.

In an accessory member for an air vehicle according to a twenty-second invention, in the nineteenth invention, the guard may include a plurality of arms and a coupling member. The plurality of arms may have proximal ends to be attached to the airframe of the air vehicle. The coupling member may couple distal ends of the plurality of arms. The plurality of arms may be formed in such a manner that, in a state in which the proximal ends of the plurality of arms are coupled to the airframe of the air vehicle, the airframe of the air vehicle is located inside the coupling member in plan view of the air vehicle and a portion of the coupling member is located higher than a center of gravity of the air vehicle. The portion may be located forward in a traveling direction of the air vehicle while the air vehicle assumes a flight attitude in plan view of the air vehicle.

### Advantageous Effects of Invention

### <Air Vehicle Control Method>

According to the first invention, when the air vehicle collides with the object, control of the flight state using the control signal for controlling the flight route at the time of the collision is stopped, and thereby the air vehicle can be prevented from colliding with the object repeatedly. Further, since the flight route can be recreated by stopping the control, flight of the air vehicle on the different flight route can be resumed.

According to the second invention, the state of the air vehicle after the collision with the object can be controlled to be a given state, and thereby damage or the like to the surroundings due to abnormal flight or the like of the air vehicle can be prevented.

According to the third invention, after the collision with the object, the air vehicle can be moved to a destination or the like by flying on the different flight route.

According to the fourth and fifth inventions, collision with the object can be easily detected.

According to the sixth invention, when the air vehicle collides with the object, damage to the airframe or the like can be prevented by the guard.

According to the seventh invention, damage to the guard can be prevented upon collision with the object.

According to the eighth invention, the collision detection sensor can be simplified.

According to the ninth invention, when the guard collides with the object, re-collision between the object and the air vehicle can be prevented.

### <Air Vehicle>

According to the tenth invention, when the air vehicle collides with the object, control of the flight state using the control signal for controlling the flight route at the time of the collision is stopped, and thereby the air vehicle can be prevented from colliding with the object repeatedly. Further, since the flight route can be recreated by stopping the control, the control unit can resume flight of the air vehicle on the different flight route.

According to the eleventh invention, the state of the air vehicle after the collision with the object can be controlled to be a given state, and thereby damage or the like to the surroundings due to abnormal flight or the like of the air vehicle can be prevented.

According to the twelfth invention, after the collision with the object, the air vehicle can be moved to a destination or the like by flying on the different flight route.

According to the thirteenth and fourteenth inventions, collision with the object can be easily detected.

According to the fifteenth invention, when the air vehicle collides with the object, damage to the airframe or the like can be prevented by the guard.

According to the sixteenth invention, damage to the guard can be prevented upon collision with the object.

According to the seventeenth invention, the collision detection sensor can be simplified.

According to the eighteenth invention, when the guard collides with the object, re-collision between the object and the air vehicle can be prevented.

### <Air Vehicle Accessory Member>

According to the nineteenth invention, by attaching it to an existing air vehicle, damage to a rotor or the airframe can be prevented when the air vehicle collides with the object.

According to the twentieth invention, damage to the guard can be prevented.

According to the twenty-first invention, the collision detection sensor can be simplified.

According to the twenty-second invention, when the guard collides with the object, re-collision between the object and the air vehicle can be prevented.

### Brief Description of Drawings

FIG. 1 is a schematic control flow diagram illustrating a method for controlling an air vehicle 1 according to this embodiment.
FIG. 2 is a schematic perspective view of the air vehicle 1 according to this embodiment.
FIG. 3 is a schematic side view of the air vehicle 1 according to this embodiment.
FIG. 4 is a schematic plan view of the air vehicle 1 according to this embodiment.
FIG. 5 is a schematic block diagram of a control unit 20.
FIG. 6 is an explanatory diagram illustrating movement when the air vehicle 1 comes into contact with an obstacle S according to this embodiment.
FIG. 7 is a schematic side view of the air vehicle 1 provided with a guard 30 including a guard arm 31 in another shape.
FIG. 8 is a schematic side view of the air vehicle 1 provided with the guard 30 including the coupling member 32 in two stages.
FIG. 9 is a schematic side view of the air vehicle 1 provided with the guard 30 including the coupling member 32 in two stages.

### Description of Embodiment

Next, an embodiment of the present invention will be described with reference to the drawings.

A method for controlling an air vehicle according to the present invention is characterized in that, even if an air vehicle comes into contact with an obstacle or the like during flight, a crash of the air vehicle can be prevented, and furthermore, damage not only to the air vehicle but also to the obstacle, a surrounding object, or the like can be prevented.

In the method for controlling an air vehicle according to the present invention, the obstacle or the like with which, for example, the air vehicle comes into contact during flight is not particularly limited, and any object that interferes with the flight of the air vehicle is targeted. Examples of the obstacle or the like include stationary objects, for example, structures such as walls, buildings, and houses, and plants such as trees, and moving objects such as automobiles, trains, and people.

### <Air Vehicle 1>

First, before describing the method for controlling an air vehicle according to this embodiment, an air vehicle 1 according to this embodiment will be described.

Note that, in the following description, a case in which the air vehicle 1 according to this embodiment flies by a rotor 15 will be described. That is, described is a case in which a lift source that generates lift force of the air vehicle 1 and a propulsion source that generates propulsive force of the air vehicle 1 are the rotor 15. The lift source and the propulsion source used for flight of the air vehicle 1 according to this embodiment are not limited to the rotor 15, and various lift sources and propulsion sources such as lifting gas used for an airship, a jet engine, and a ducted fan can be adopted. Further, the lift source and the propulsion source that are provided may be those having independent functions (that is, a function to generate lift force and a function to generate propulsive force) or those having both functions like a rotor. The lift source and the propulsion source used for the flight of the above-described air vehicle 1 correspond to a drive mechanism in the claims.

In addition, described below is a case in which the air vehicle 1 according to this embodiment flies autonomously based on flight route information stored in a storage unit 24 of a control unit 20 described later. The air vehicle 1 according to this embodiment includes an air vehicle that flies based on a flight control signal from outside. That is, the method for controlling an air vehicle according to this embodiment is applicable also to the air vehicle 1 whose flight is controlled by a flight control signal from outside such as a proportional controller.

### <Airframe 10>

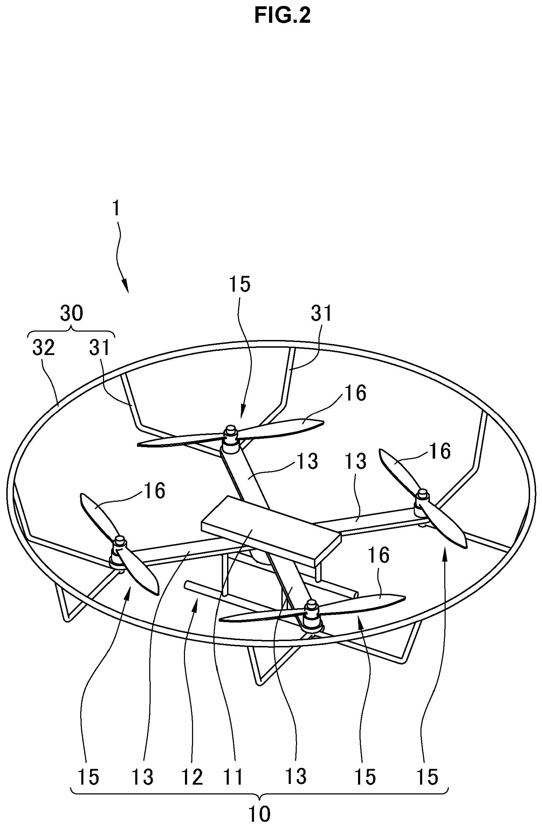

As illustrated in FIGs. 2 to 4, the air vehicle 1 includes an airframe 10. The airframe 10 includes an airframe main body 11, a leg part 12 provided below the airframe main body 11 to place the air vehicle 1 on the ground, and the rotor 15 described above. Further, the airframe 10 is provided with a guard 30 described later. The airframe main body 11 is provided with the rotor 15, the control unit 20, devices that perform various types of work, such as a camera that performs imaging and inspection, an infrared camera, a millimeter-wave radar, and LiDAR, a battery that supplies power to these devices, and the like.

### <Rotor 15>

As illustrated in FIGs. 2 to 4, four arms 13 extending laterally from the airframe main body 11 are each provided with the rotor 15. Each rotor 15 includes a propeller 16 and a motor that rotates the propeller 16.

Note that an attitude of each rotor 15 may be fixed with respect to the corresponding arm 13, but each rotor 15 may be attached to the arm 13 via an attitude adjustment mechanism that adjusts the attitude of the rotor 15 with respect to the arm 13.

The number of rotors 15 provided to the air vehicle 1 according to this embodiment may be any number as long as the air vehicle 1 can fly stably. For example, the number of rotors 15 may be two or three, or five or more rotors 15 may be provided. One biaxial contra-rotation propeller including two propellers that rotate in opposite directions may be provided.

One rotor 15 may be provided to each arm 13, or a plurality of rotors 15 may be provided to one arm 13. The rotor 15 may be directly installed to the airframe main body 11 instead of being provided to the arm 13.

### <Guard 30>

As illustrated in FIGs. 2 to 4, the guard 30 is provided to the airframe 10. The guard 30 includes a plurality of guard arms 31 and a coupling member 32 provided to couple the plurality of guard arms 31.

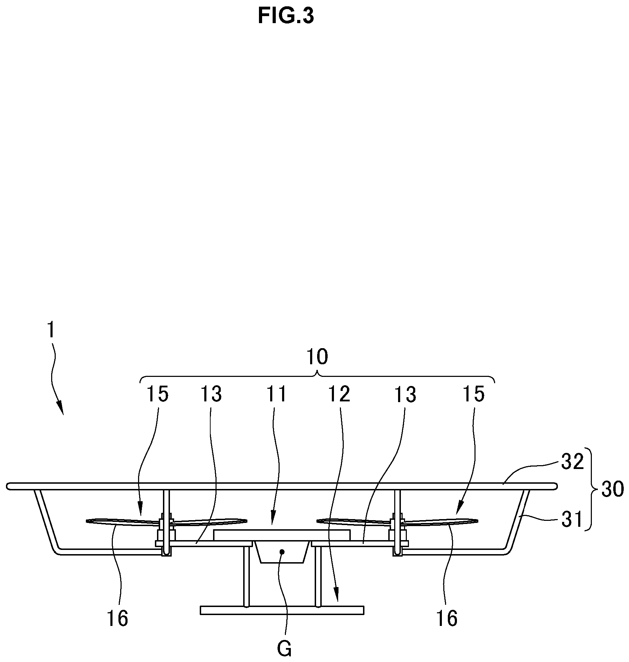

Each of the plurality of guard arms 31 is an axial member made of an elastic member, for example, resin such as plastic, or metal, and is provided to the arm 13 of the airframe 10. For example, in FIGs. 2 to 4, two guard arms 31 are provided to each arm 13 of the airframe 10. Each guard arm 31 includes its proximal end coupled to the arm 13 of the airframe 10. Moreover, the guard arm 31 is provided in such a manner that, in a state in which the airframe 10 is horizontal, a distal end of the guard arm 31 is located outward of the airframe 10 and the distal end is located higher than the proximal end (see FIG. 3).

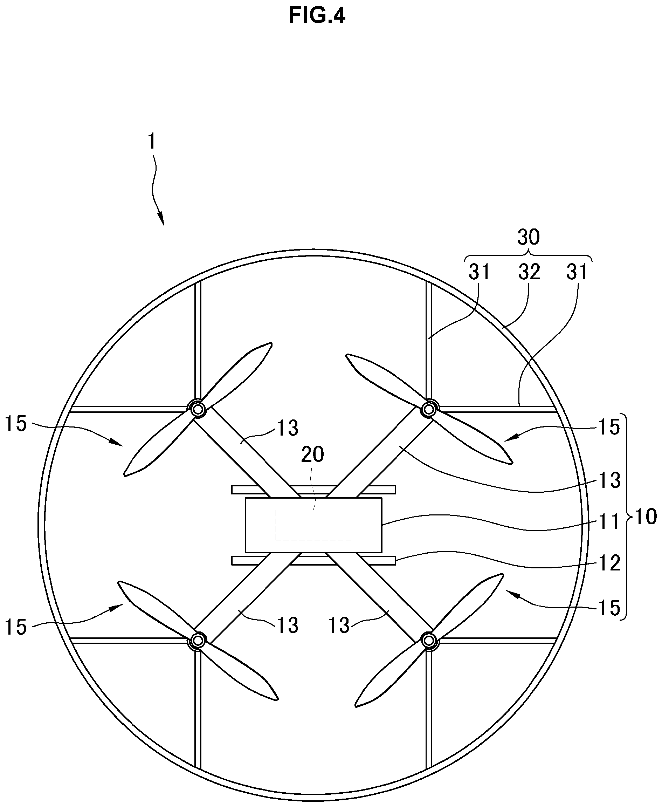

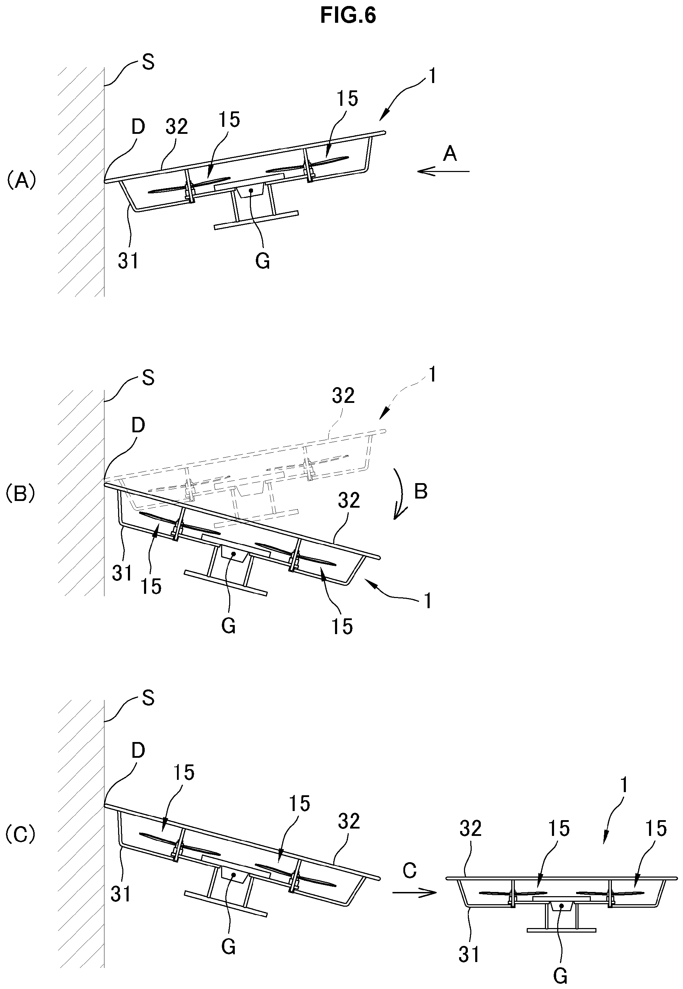

The coupling member 32 is attached to the plurality of guard arms 31. The coupling member 32 is made of an axial member made of an elastic member, and the coupling member 32 is provided in such a manner as to be located outward of the airframe 10 including the rotor 15. Specifically, in plan view of the air vehicle 1 (see FIG. 4), the coupling member 32 is provided in such a manner that the entire airframe 10 is surrounded by the coupling member 32, that is, the entire airframe 10 is located in a region surrounded by the coupling member 32. Moreover, the coupling member 32 is provided in such a manner as to include a portion located higher than a center of gravity G of the air vehicle 1 including the guard 30 (see FIGs. 3 and 6). More specifically, while the air vehicle 1 assumes a flight attitude, a portion of the coupling member 32 located forward in a traveling direction of the air vehicle 1 is located higher than the center of gravity G (see FIG. 6).

### <Control Unit 20>

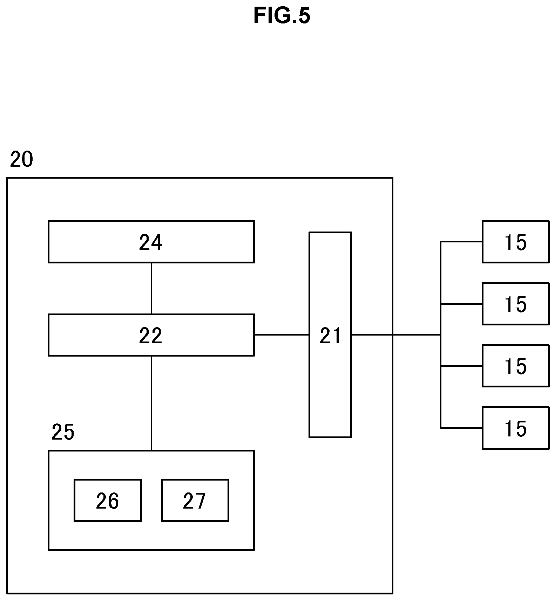

As illustrated in FIG. 4, the airframe main body 11 includes the control unit 20 for controlling operation of the air vehicle 1. The control unit 20 includes a flight controller 21, a companion computer 22, the storage unit 24, and a collision detection unit 25 that detects contact between the air vehicle 1 and an obstacle or the like (see FIG. 5). The control unit 20 includes various devices for acquiring information on autonomous flight of the air vehicle 1, a position and an attitude of the air vehicle 1, surrounding circumstances, and the like. For example, the control unit 20 may include a GNSS receiver, an IMU stereo camera, a magnetic azimuth sensor, a laser scanner, an ultrasonic sensor, a millimeter-wave radar, and/or the like.

Note that, in a case in which flight of the air vehicle 1 is controlled using a flight control signal transmitted from an external device such as a proportional controller, a receiver for receiving the flight control signal is also provided to the control unit 20.

### <Storage Unit 24>

The storage unit 24 stores information necessary for work, such as autonomous flight and inspection of the air vehicle 1. For example, the storage unit 24 stores information on a flight route on which the air vehicle 1 flies autonomously, information on work performed by the air vehicle 1, and the like. Examples of the information on the flight route can include information on coordinates of a departure point and a destination, information on a flight route from the departure point to the destination, and information on a structure or the like around the flight route. Further, in a case in which a camera performs imaging to inspect a structure or the like, the information on the work includes information on the structure or the like to be inspected and an inspection point in the structure or the like, information on a gimbal angle, an imaging condition of the camera, and the like.

### <Flight Controller 21>

The flight controller 21 has a function of controlling flight of the air vehicle 1. The flight controller 21 controls an attitude, a moving direction, a moving speed, and the like of the air vehicle 1 based on information supplied from the companion computer 22. That is, the flight controller 21 has a function of controlling operation of the rotor 15 and the like based on a control signal provided from the companion computer 22 to control the attitude, moving direction, moving speed, and the like of the air vehicle 1. For example, when the control signal includes information on the flight route on which the air vehicle 1 moves, that is, information on the flight route on which the air vehicle 1 flies autonomously, the flight controller 21 controls the operation of the rotor 15 and the like in such a manner that the air vehicle 1 moves along the flight route.

Note that the control signal including the information on the flight route on which the air vehicle 1 moves corresponds to "control signal for controlling a flight route" in the claims. Below, the control signal including the information on the flight route may be simply referred to as a flight control signal. On the other hand, a control signal not including information on a flight route may be simply referred to as a control signal.

### <Companion Computer 22>

The companion computer 22 has a function of providing the control signal to the flight controller 21. For example, in the case in which the air vehicle 1 flies autonomously, the companion computer 22 has a function of creating the flight control signal and providing the created flight control signal to the flight controller 21. The flight control signal includes information on a position and an attitude of the air vehicle 1, surrounding circumstances, and the like, and information on a flight route on which the air vehicle 1 flies autonomously. The information on the flight route is stored in the storage unit 24. Note that, in the case in which the flight of the air vehicle 1 is controlled using a signal from an external device, the companion computer 22 has a function of creating the control signal and providing the created control signal to the flight controller 21. The control signal includes information on a position and an attitude of the air vehicle 1, surrounding circumstances, and the like, and the signal supplied from the external device.

The companion computer 22 has a function of, when a collision detection unit 25, which will be described later, detects contact or collision between the air vehicle 1 and an obstacle or the like (hereinafter, contact or collision between the air vehicle 1 and an obstacle or the like may be simply referred to as collision or the like), stopping control of the flight state using the flight control signal at the time collision or the like occurs (hereinafter may be simply referred to as at the time of collision or the like). That is, the companion computer 22 has a function of, when the collision detection unit 25, which will be described later, detects collision or the like between the air vehicle 1 and an obstacle or the like, stopping provision of the flight control signal provided to the flight controller 21 at the time of collision or the like (hereinafter may be referred to as a collision-time signal).

The companion computer 22 further has a function of, when the collision detection unit 25 detects collision or the like, providing a post-collision control instruction signal to the flight controller 21 after a certain time has elapsed since provision of the collision-time signal was stopped, or simultaneously with stopping of provision of the collision-time signal. The post-collision control instruction signal is a signal instructing the flight controller 21 to fly the air vehicle 1 after collision, based on information on flight of the air vehicle 1 after the collision. The information is stored in the storage unit 24.

Note that, in the case in which the flight state of the air vehicle 1 is controlled using only a signal supplied from an external device, the signal supplied from the external device may be directly supplied to the flight controller 21 without intervention of the companion computer 22 to control the flight state of the air vehicle 1. In this case, the companion computer 22 may have a function of supplying, to the external device, information from a device that is provided to the air vehicle 1 and that acquires information on a position and an attitude of the air vehicle 1 and surrounding circumstances, and a signal indicating detection of the collision or the like by the collision detection unit 25.

### <Collision Detection Unit 25>

The collision detection unit 25 has a function of detecting collision or the like of the air vehicle 1 with an obstacle or the like. Specifically, the collision detection unit 25 includes a collision detection sensor 26 and an arithmetic unit 27. The collision detection sensor 26 is provided to the airframe main body 11 and/or the arm 13 of the airframe 10, and/or the guard 30. The arithmetic unit 27 detects collision or the like based on a signal from the collision detection sensor 26 and transmits a signal notifying the companion computer 22 of the collision or the like. The collision detection sensor 26 of the collision detection unit 25 may be any sensor that enables the collision detection unit 25 to detect collision or the like based on the signal from the collision detection sensor 26. For example, the collision detection sensor 26 may be any sensor that enables the arithmetic unit 27 to detect collision or the like by performing calculation on the signal from the collision detection sensor 26 or conversion from an analog signal into a digital signal.

The collision detection sensor 26 may be any sensor capable of detecting collision or the like between the air vehicle 1 and an obstacle or the like. For example, a sensor such as a microswitch, a strain sensor, a contact sensor, a pressure sensor, and a force sensor can be adopted as the collision detection sensor 26. In a case in which a microswitch or a contact sensor is adopted as the collision detection sensor 26, collision or the like can be detected when, for example, the microswitch or the contact sensor collides with an obstacle or the like. In a case in which a strain sensor is provided as the collision detection sensor 26, when the airframe main body 11 or the arm 13 of the airframe 10, the guard 30, or the like to which the strain sensor is provided is deformed due to collision or the like, the strain sensor detects the deformation, and thereby collision or the like can be detected. In a case in which a pressure sensor is provided as the collision detection sensor 26, collision or the like can be detected based on pressure displacement of the guard portion. In a case in which a force sensor is provided as the collision detection sensor 26, collision or the like can be detected based on a change in force received by the sensor.

Note that, in a case in which the companion computer 22 has the function of the arithmetic unit 27 of the collision detection unit 25, or in a case in which the companion computer 22 can detect collision or the like based on the signal from the collision detection sensor 26 without performing calculation on the signal from the collision detection sensor 26 or conversion from an analog signal into a digital signal, the collision detection unit 25 may not be provided with the arithmetic unit 27. That is, the collision detection unit 25 may include only the collision detection sensor 26.

Further, in a case in which the control unit 20 has a function of detecting an attitude change of the airframe 10, collision or the like between the air vehicle 1 and an obstacle or the like can be detected based on the attitude change of the airframe 10. When the attitude of the air vehicle 1 changes from the flying state, for example, once a tilt of the airframe 10 with respect to a horizontal direction (or vertical direction) changes by a certain angle or more within a given time (for example, 10° or more within 1 second), that is, once an angular velocity of the attitude change becomes a certain value or more, it can be determined that the air vehicle 1 has collided with an obstacle or the like, for example. For example, in a case in which the control unit 20 includes an IMU sensor, an attitude sensor, an acceleration sensor, an angular velocity sensor, an atmospheric pressure sensor, and/or the like, the control unit 20 can also detect collision or the like based on the attitude change of the airframe 10. In this case, the IMU sensor or the like can be made to function as the collision detection unit, and thereby the collision detection unit 25 including the collision detection sensor as described above may not be provided. The function of detecting collision or the like, such as the IMU sensor of the control unit 20, corresponds to a collision detection function in the claims.

A method for detecting collision or the like by the IMU sensor or the like of the control unit 20 is not limited to the above method. For example, collision or the like can also be detected by a method of confirming whether, regarding a tilt of the airframe 10 with respect to the horizontal direction (or vertical direction), a difference between an instruction value of the control unit 20 and a measured value (actual value) is equal to or more than a certain angle for a given time (for example, 10° or more in 3 seconds).

### <Flight Control of Air Vehicle 1 According to This Embodiment>

The air vehicle 1 according to this embodiment has the configuration as described above. Therefore, even in the case of collision or the like of the air vehicle 1 with an obstacle or the like, it is possible to prevent repetition of the collision or the like of the air vehicle 1 with the obstacle or the like.

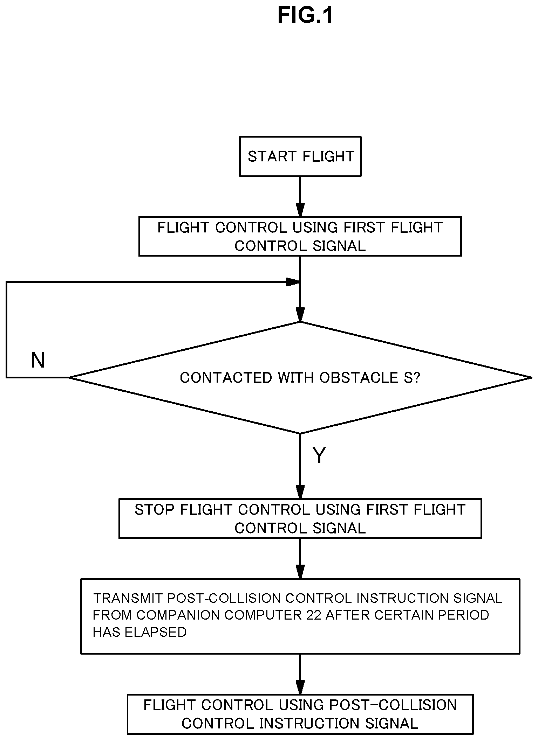

In the case in which the air vehicle 1 flies autonomously from a departure point to a destination, the flight control signal is supplied from the companion computer 22 of the control unit 20 to the flight controller 21, and the air vehicle 1 flies along a flight route based on this flight control signal (hereinafter referred to as a first flight control signal) (see FIG. 1).

When an obstacle S is present on the flight route of the air vehicle 1 flying based on the first flight control signal, in a case in which the air vehicle 1 cannot detect the obstacle S or collision of the air vehicle 1 with the obstacle S is unavoidable, the air vehicle 1 collides with the obstacle S (see FIG. 6(A)). At this time, since the air vehicle 1 is provided with the coupling member 32 of the guard 30 so as to surround a periphery of the airframe 10, the coupling member 32 of the guard 30 collides with the obstacle S. Normally, in the case of the air vehicle 1 that flies by the rotor 5, the air vehicle 1 flies in a tilted state in the moving direction (an arrow A direction in FIG. 6(A)), and thereby the air vehicle 1 collides with the obstacle S in the tilted state (see FIG. 6(A)).

When the collision detection unit 25 detects this collision, the companion computer 22 of the control unit 20 stops the control using the first flight control signal (that is, the collision-time signal) (FIG. 1). That is, the companion computer 22 of the control unit 20 stops providing the first flight control signal to the flight controller 21. Then, the flight controller 21 stops the flight control based on the first flight control signal, and movement along the flight route included in the first flight control signal is stopped. At this time, the flight controller 21 stops the movement along the flight route but continues operation of the rotor 5.

Here, the coupling member 32 of the guard 30 is located higher than the center of gravity G of the airframe 10 in the state in which the air vehicle 1 is flying, that is, the air vehicle 1 is in collision with the obstacle S. Therefore, the air vehicle 1 changes its attitude in such a manner as to swing in a direction indicated by arrow B, where a contact point D between the obstacle S and the coupling member 32 is a viewpoint (see FIG. 5(B)). That is, the air vehicle 1 is tilted in an opposite direction to the attitude in the flight control based on the first flight control signal. Then, since the flight controller 21 continues the operation of the rotor 5 while stopping the movement along the flight route, the air vehicle 1 moves in a direction opposite to the moving direction based on the first flight control signal. That is, the air vehicle 1 moves in a direction away from the obstacle S (an arrow C direction in FIG. 5(C)).

After a certain time has elapsed since the flight control based on the first flight control signal was stopped, when the post-collision control instruction signal is transmitted from the companion computer 22, the flight controller 21 controls the flight of the air vehicle 1 based on an instruction included in the post-collision control instruction signal.

For example, in a case in which the post-collision control instruction signal includes a signal instructing hovering, once the flight control based on the first flight control signal is stopped after collision, the air vehicle 1 moves away from the obstacle S as described above, and thus the air vehicle 1 becomes a hovering state at a position away from the obstacle S. Then, since the hovering air vehicle 1 is located away from the obstacle S by a certain distance, occurrence of a problem such as re-collision of the air vehicle 1 with the obstacle S can be prevented.

Further, in a case in which the post-collision control instruction signal includes a signal to move the air vehicle 1 in an opposite direction as compared with the immediately preceding flight control signal, that is, a signal to move the air vehicle 1 in a direction opposite to the moving direction based on the collision-time signal and then to instruct hovering, the hovering air vehicle 1 hovers at a position having a sufficient distance from the obstacle S. Therefore, occurrence of a problem such as re-collision of the air vehicle 1 with the obstacle S can be prevented.

Note that, in the case in which the post-collision control instruction signal includes the instruction as described above, even when the post-collision control instruction signal is provided from the companion computer 22 to the flight controller 21 immediately after the flight control based on the first flight control signal is stopped, occurrence of a problem such as re-collision of the air vehicle 1 with the obstacle S can be prevented. In particular, in the case in which the post-collision control instruction signal includes the signal to move the air vehicle 1 in the opposite direction as compared with the collision-time signal and then to instruct hovering, the hovering air vehicle 1 can hover at a position having a certain distance from the obstacle S. Therefore, occurrence of a problem such as re-collision of the air vehicle 1 with the obstacle S can be prevented.

### <Post-Collision Control Instruction Signal>

The post-collision control instruction signal may include an instruction to fly the air vehicle 1 on a flight route different from the flight route in the collision-time control (hereinafter may be referred to as "different route") when the collision detection unit 25 detects collision or the like. In this case, information on the different route is stored in the storage unit 24. When collision or the like is detected in the case of flight under autonomous control, the companion computer 22 desirably has a function of determining which one of cases of causing the hovering state as described above or causing flight on the different route is to be selected based on position information of a collision location, climate information, remaining battery, and/or the like.

Note that, in the case in which flight is controlled using a signal from an external device, upon detection of collision or the like, the companion computer 22 may automatically cut off the signal from the external device (that is, stop the control using the signal from the external device) and then automatically perform control to cause the hovering state as described above. Further, upon detection of collision or the like, flight may be performed in accordance with a command from the external device (a command different from the control signal up to the collision or the like). For example, the fact that collision or the like is detected may be transmitted to the external device, and another command transmitted from the external device that has received that signal may make the air vehicle 1 fly autonomously back to an original position.

Note that the companion computer 22 does not necessarily provide the post-collision control instruction signal to the flight controller 21 after the flight control based on the first flight control signal is stopped. In this case, since the air vehicle 1 flies while maintaining an operating state of the rotor 15 at the time of collision, a moving direction and a moving amount of the air vehicle 1 vary depending on an attitude after the collision. However, when the positional relationship between the coupling member 32 of the guard 30 and the center of gravity G of the air vehicle 1 is in the state as described above, at least continuous collision of the air vehicle 1 with the obstacle S can be prevented.

### <Guard 30>

The coupling member 32 of the guard 30 may be made of an annular-shaped member, or may be made of a single axial member bent into an annular shape. The coupling member 32 may be formed in an annular shape by a plurality of axial members coupled to each other. When the coupling member 32 is made of an annular-shaped member, an impact load generated in collision of the air vehicle 1 with an obstacle can be distributed over the entire coupling member 32. Thereby, damage to the coupling member 32 can be suppressed, and an impact load input to the airframe 10 via the guard arm 31 can be reduced. When the coupling member 32 is made of a single axial member bent into an annular shape, the coupling member 32 and the guard 30 can be made lighter as compared with the case in which the coupling member 32 is formed in an annular shape by a plurality of axial members coupled to each other. When the coupling member 32 is formed in an annular shape by a plurality of axial members coupled to each other, an impact load generated in collision of the air vehicle 1 with an obstacle can be distributed to the plurality of axial members.

The above example describes the case in which both the guard arm 31 and the coupling member 32 of the guard 30 are made of axial members. The guard arm 31 and the coupling member 32 of the guard 30 are not necessarily made of axial members, and may be made of plate-like members. For example, when the coupling member 32 is made of a plate-like member, the coupling member 32 itself has a larger volume as compared with the case in which, for example, the coupling member 32 is formed in an annular shape by axial members coupled to each other, which can increase a volume for distributing in the coupling member 32 an impact load generated in collision of the air vehicle 1 with an obstacle.

The guard arm 31 and the coupling member 32 of the guard 30 are not necessarily made of elastic members. However, when the guard arm 31 and the coupling member 32 of the guard 30 are made of elastic members, there is a possibility that impact absorbency at the time of collision or the like can be improved.

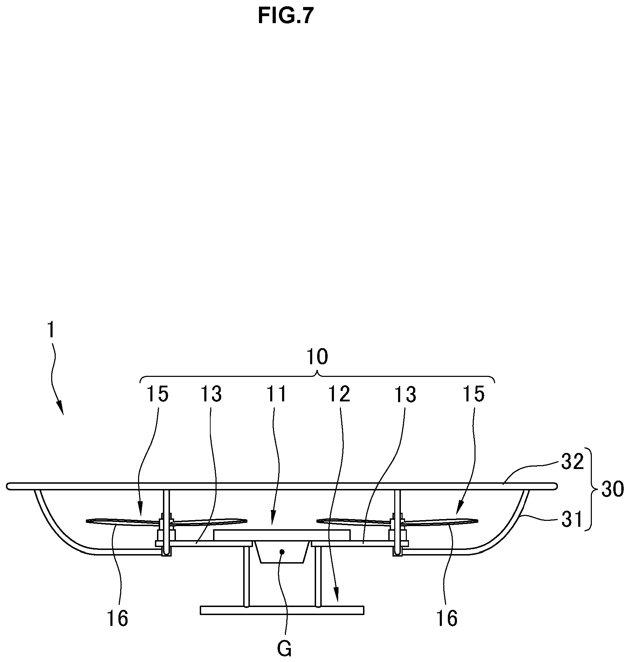

A shape of the guard arm 31 of the guard 30 is not particularly limited. For example, as illustrated in FIG. 3, the guard arm 31 may have a shape including a portion extending horizontally from the arm 13 and a portion extending upward from a distal end of that portion (a portion to which the coupling member 32 is connected). Further, as illustrated in FIG. 7, the guard arm 31 may have a shape curving to draw an arc upward from a proximal end toward a distal end. With this shape, there is a possibility that impact absorbency at the time of collision or the like can be improved.

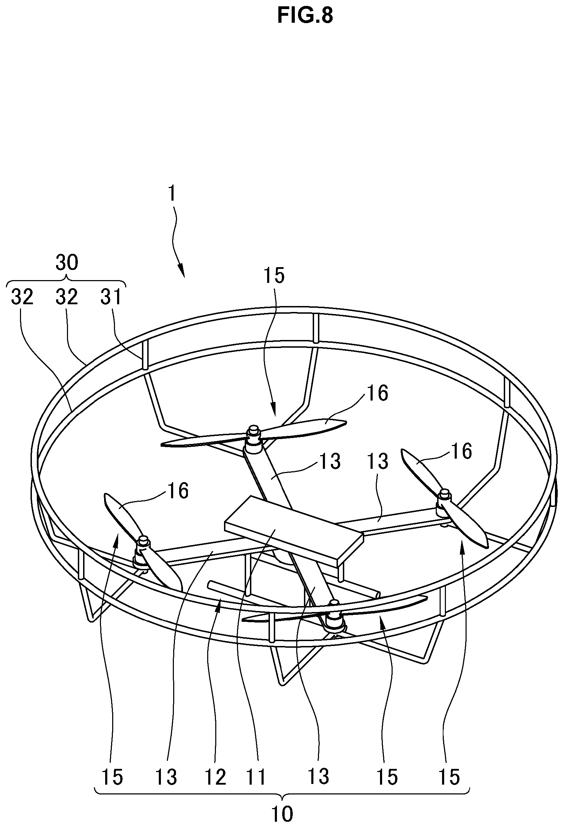

The above example describes a case in which the coupling member 32 of the guard 30 is provided in a single stage. However, the coupling member 32 may be provided in two stages in the vertical direction (see FIGs. 8 and 9). When the coupling member 32 is provided in two stages, there is a possibility that impact resistance when the air vehicle 1 comes into contact with an obstacle or the like can be improved.

The guard 30 may be formed integrally with the arm 13 of the airframe 10 or may be fixed to the arm 13 in an undetachable manner. However, in a case in which the guard 30 is detachable from the airframe 10, the guard 30 is easily replaceable when the guard 30 is damaged by collision or the like. For example, in a case in which the guard arm 31 of the guard 30 and the arm 13 of the airframe 10 are coupled by a screw or the like, the guard 30 is easily attachable and detachable to/from the airframe 10.

In addition, the guard 30 having the structure as described above may be capable of being attached to an airframe of an existing air vehicle. That is, the guard 30 may be provided as a stand-alone unit. For example, in a case of an air vehicle having a size in plan view that allows the air vehicle to be disposed in an inner space of the coupling member 32 of the guard 30, the guard 30 can be attached to the existing air vehicle by coupling the guard arm 31 of the guard 30 to the airframe of the air vehicle. Such a guard 30 corresponds to an accessory member for an air vehicle in the claims.

Note that, in the case in which the guard is provided as the accessory member for an air vehicle, the guard arm may have a structure whose length and angle are adjustable. In this case, adjusting the length and angle of the guard arm allows the guard to be disposed at an appropriate position in accordance with a shape of the air vehicle. For example, in a case in which the coupling member of the guard has an annular shape, the center of the coupling member can be aligned with the center of the air vehicle. Further, the guard can be adjusted in such a manner that a portion located higher than the center of gravity of the air vehicle with the guard attached is present at a portion of the coupling member located forward in the traveling direction of the air vehicle while the air vehicle assumes the flight attitude (see FIG. 6(A)).

A member used for the guard 30 (the guard arm 31 and the coupling member 32) is not particularly limited. However, in terms of improving impact absorbency, a flexural modulus of the member used for the guard 30 is preferably 5.0 GPa or more, and more preferably 8.0 GPa or more. Further, the flexural modulus of the member used for the guard 30 is desirably high. However, when a flexural modulus of the guard 30 is excessively high, the airframe 10 may be damaged before the guard 30, and therefore the flexural modulus of the guard 30 is preferably 500.0 GPa or less, more preferably 125.0 GPa or less, and further preferably within a range of 50.0 GPa or less. From the similar perspective, a flexural strength of a material itself forming the member used for the guard 30 is preferably 50.0 MPa or more, more preferably 100.0 MPa or more, and further preferably 250.0 MPa or more, and from the similar perspective, a flexural strength of the guard 30 is preferably 30.0 GPa or less. Note that the flexural modulus and the flexural strength described above mean those obtained based on results obtained by a test defined in ISO 178.

In order for the guard 30 to have at least one of the flexural modulus and the flexural strength as described above, as the material for the guard 30, for example, resin material, such as one or more of thermoplastic resins including a polyethylene resin, a polypropylene resin, a polystyrene resin, an ABS resin, a vinyl chloride resin, a methyl methacrylate resin, a nylon resin, a fluororesin, a polycarbonate resin, a polyester resin, a polyether ether ketone resin, a polyimide resin, and a polyphenylene sulfide resin, a thermoplastic resin composition containing the above-mentioned one or more thermoplastic resins and an additive including thermoplastic elastomer, such as an olefin-based elastomer, a styrene-based elastomer, a polyester-based elastomer, a silicone-based elastomer, an acrylate-based elastomer, and a urethane-based elastomer, a curable resin composition containing the above-mentioned one or more thermoplastic resins and curable resin such as an epoxy resin and a phenol resin, or a fiber-reinforced material in which these are reinforced with a fiber material, can be used. As the fiber material described above, one or more of glass fiber, carbon fiber, aramid fiber, and the like can be used.

The material for the guard 30 is not limited to the resin material described above, and for example, metal material, such as pure titanium, a titanium alloy, steel, an aluminum alloy, a magnesium alloy, and a steel such as a maraging steel, a stainless steel, and soft iron, can be used. Further, in order to make the guard arm 31 lightweight and high-strength, a material having a hollow structure, a honeycomb structure, or the like may be adopted for the guard arm 31. As the material for the guard 30, for example, a carbon material such as a carbon rod and a carbon pipe may be used.

### <In the Case of Not Having Guard 30>

The above example describes the case in which the air vehicle 1 includes the guard 30. However, the guard 30 is not necessarily provided. As described above, in the case in which the rotor 15 is provided, if the guard 30 is not provided, collision or the like of the propeller 16 of the rotor 15 with an obstacle or the like may occur. Then, the propeller 16 of the rotor 15 may be damaged and the air vehicle 1 may become unable to fly and may crash. However, by providing the guard 30, collision or the like of the propeller 16 of the rotor 15 with an obstacle or the like can be prevented. Note that even when collision or the like of the air vehicle 1 with an obstacle or the like occurs, if there is a low possibility that the lift source and the propulsion source (at least the lift source) get damaged, the guard 30 may not be provided.

### <Application of Air Vehicle Control Method According to This Embodiment>

The method for controlling an air vehicle according to this embodiment is also suitable as a control method for controlling the air vehicle 1 used for inspection, logistics, aerial photography, spraying of agricultural chemicals, or the like. In a case in which the air vehicle 1 is provided with an imaging device, the method for controlling an air vehicle according to this embodiment can be adopted as a method for controlling the air vehicle 1 used for inspection from outside of a structure such as a tunnel, a bridge, a retaining wall, a lattice tower, a chimney, a plant, an apartment, and a building (hereinafter simply referred to as a structure or the like). For example, when an inspection target part included in a wall, floor, ceiling, or the like of a structure or the like is imaged by an imaging device or the like, and the captured image is output as data to any external device by wireless communication, the structure or the like can be, for example, inspected accurately and safely. In this case, the imaging device provided to the air vehicle 1 can be a vision sensor (camera), an infrared camera, or the like. Further, in the case in which the inspection target part included in the wall, floor, ceiling, or the like of the structure or the like is inspected, providing a sensor device as well as the imaging device to the air vehicle 1 enables the imaging device to image the inspection target part while the sensor device is brought into contact with the inspection target part. Then, the inspection target part can be inspected using the captured image and a result detected by the sensor device, and thereby the same inspection can be performed by another method, which can improve inspection accuracy. Further, different inspections can be performed simultaneously, which can improve inspection efficiency. In addition, for a purpose of a hammering test or the like of a structure or the like, the air vehicle 1 may include a hammering test device having a striking device including a hammering test rod, a hammer, or the like. In this case, for example, states of a surface and an inside of an inspection target part such as a wall can be inspected by a sound acquired by striking the inspection target part with the striking device. When the air vehicle 1 is provided with the hammering test device in addition to the imaging device and the sensor device, the same inspection can also be performed by another method. Further, different inspections can be performed simultaneously, which can improve inspection efficiency. In this case, an inspection target part included in a wall, floor, ceiling, or the like may be inspected using the hammering test device while the sensor device or the like is brought into contact with the inspection target part.

### Industrial Applicability

The method for controlling an air vehicle according to the present invention is also suitable as a control method for controlling an air vehicle used for inspection, logistics, aerial photography, spraying of agricultural chemicals, or the like.

### Reference Signs List

1 air vehicle
10 airframe
11 airframe main body
13 arm
15 rotor
20 control unit
21 flight controller
22 companion computer
24 storage unit
25 collision detection unit
26 collision detection sensor
30 guard
31 guard arm
32 coupling member

## Claims

1. A method for controlling an air vehicle whose flight state is controlled based on a control signal for controlling a flight route, the method comprising
when collision between the air vehicle and an object is detected, stopping control of the flight state using the control signal for controlling the flight route at the time of the collision.

2. The method for controlling the air vehicle according to claim 1, comprising, after the stopping of the control of the flight state using the control signal for controlling the flight route at the time of the collision, controlling the flight state based on at least one of a post-collision control instruction recorded in the air vehicle and a control instruction from outside.

3. The method for controlling the air vehicle according to claim 2, wherein the post-collision control instruction comprises information instructing flight on a flight route different from the flight route at the time of the collision.

4. The method for controlling the air vehicle according to claim 1, wherein a control unit configured to control flight of the air vehicle comprises a collision detection function of detecting the collision between the air vehicle and the object.

5. The method for controlling the air vehicle according to claim 4, wherein the collision detection function of the control unit comprises detecting the collision based on a signal from a collision detection sensor configured to detect the collision between the air vehicle and the object.

6. The method for controlling the air vehicle according to claim 5, wherein the air vehicle comprises a guard protecting an airframe.

7. The method for controlling the air vehicle according to claim 6, wherein the guard is made of an elastic member.

8. The method for controlling the air vehicle according to claim 7, wherein the collision detection sensor comprises a sensor configured to detect deformation of the elastic member.

9. The method for controlling the air vehicle according to claim 6, wherein the guard is provided in such a manner that a portion of the guard is located higher than a center of gravity of the air vehicle, the portion being located outward of the airframe and forward in a traveling direction of the air vehicle while the air vehicle assumes a flight attitude in plan view of the air vehicle.

10. An air vehicle comprising:
an airframe comprising a drive mechanism; and
a control unit configured to control operation of the drive mechanism to control a flight state, wherein
the control unit comprises:
a collision detection function of detecting collision between the airframe and an object; and
a function of, when the collision detection function detects collision between the air vehicle and the object, stopping control of the flight state at the time of the collision.

11. The air vehicle according to claim 10, wherein the control unit comprises a function of, after the stopping of the control of the flight state at the time of the collision, controlling the flight state based on at least one of a post-collision control instruction recorded in the control unit and a control instruction from outside.

12. The air vehicle according to claim 11, wherein the post-collision control instruction comprises information instructing flight on a flight route different from the flight route at the time of the collision.

13. The air vehicle according to claim 10, wherein the control unit comprises a collision detection function of detecting the collision between the air vehicle and the object.

14. The method for controlling the air vehicle according to claim 13, wherein the collision detection function of the control unit comprises detecting the collision based on a signal from a collision detection sensor configured to detect the collision between the air vehicle and the object.

15. The air vehicle according to claim 14, wherein the air vehicle comprises a guard protecting the airframe.

16. The air vehicle according to claim 15, wherein the guard is made of an elastic member.

17. The air vehicle according to claim 16, wherein the collision detection sensor comprises a sensor configured to detect deformation of the elastic member.

18. The air vehicle according to claim 15, wherein the guard is provided in such a manner that a portion of the guard is located higher than a center of gravity of the air vehicle, the portion being located outward of the airframe of the air vehicle and forward in a traveling direction of the air vehicle while the air vehicle assumes a flight attitude in plan view of the air vehicle.

19. An accessory member for an air vehicle, comprising a guard to be attached to an airframe of an air vehicle to protect the airframe, wherein
the guard comprises a collision detection sensor configured to detect collision with an object.

20. The accessory member for the air vehicle according to claim 19, wherein the guard is made of an elastic member.

21. The accessory member for the air vehicle according to claim 20, wherein the collision detection sensor comprises a sensor configured to detect deformation of the elastic member.

22. The accessory member for the air vehicle according to claim 19, wherein the guard comprises:
a plurality of arms whose proximal ends are to be attached to the airframe of the air vehicle; and
a coupling member coupling distal ends of the plurality of arms, and
the plurality of arms are formed in such a manner that, in a state in which the proximal ends of the plurality of arms are coupled to the airframe of the air vehicle, the airframe of the air vehicle is located inside the coupling member in plan view of the air vehicle and a portion of the coupling member is located higher than a center of gravity of the air vehicle, the portion being located forward in a traveling direction of the air vehicle while the air vehicle assumes a flight attitude in plan view of the air vehicle.
